# EUROPEAN PATENT APPLICATION

(11) **EP 3 666 075 A1**
(43) Date of publication of application: **17.06.2020**
(21) Application number: 18212174.9
(22) Date of filing: 13.12.2018
(51) Int. Cl.: A01N 65/06, A01N 25/10, A01P 1/00

(54) **ANTIMICROBIAL POLYMER COMPOSITION**

(71) Applicant: Premix Oy, 05200 Rajamäki (FI)
(72) Inventor: Alha, Kari, 04230 Kerava (FI); Mylläri, Ville, 33870 Tampere (FI)
(74) Representative: Papula Oy

(57) **Abstract**

A polymer composition and its use. The polymer composition contains antimicrobial material for inhibiting the growth of micro-organisms in close proximity to said polymer composition. The polymer composition comprises a polymeric substrate comprising at least one polymer, a coniferous resin acid(s) dispersed in the polymeric substrate, and a booster material. The booster material comprises at least one of chemicals listed herein: higher alcohols, organic alkali salts or earth alkali salts, alkyl-p-hydroxybenzoates or alkali-poly-phosphates, nitrates, phosphates, and lactylates.

## Description

### BACKGROUND

The invention relates to a polymer composition containing antimicrobial materials for inhibiting the growth of micro-organisms.

The invention further relates to a use of the polymer composition.

The demand for antimicrobial materials is constantly growing. For instance, the emergence of antibiotic-resistant strains of Salmonella, E. Coli, S. Aureus, and Listeria is a worldwide problem e.g. in clinical medicine.

It has been found that coniferous resin acids, including their derivatives, possess antimicrobial properties. The derivate can be, for example, an ester such as ethyl ester, isopropyl ester or glycerol ester of the resin acids.

There is, however, a problem that known thermoplastic materials containing coniferous resins acids have a poor antibacterial resistance, or no resistance at all, against gram-negative bacteria.

### BRIEF DESCRIPTION

Viewed from a first aspect, there can be provided a polymer composition, containing antimicrobial material for inhibiting the growth of micro-organisms in close proximity to said polymer composition, the polymer composition comprising:
- a polymeric substrate comprising at least one polymer,
- a coniferous resin acid(s) dispersed in the polymeric substrate, and
- a booster material, the booster material comprising at least one of chemicals listed herein:
- higher alcohols having at least one hydroxyl group and molecular weight between 80 g/mol and 400 g/mol,
- organic alkali salts or earth alkali salts,
- alkyl-p-hydroxybenzoates or alkali-poly-phosphates,
- nitrates,
- phosphates, and
- lactylates.

The antimicrobial efficacy of coniferous resin can be improved greatly by adding the booster chemical into the composition, especially against gram-negative bacteria, such as Salmonella, E. Coli and Yersinia.

Viewed from a further aspect, there can be provided a use of polymer composition as defined above for inhibiting micro-organism.

Thereby a method for effectively inhibiting the growth of micro-organisms may be achieved.

In an aspect, the present invention provides a method of inhibiting the growth of microorganisms in an environment by treating the environment with the polymer composition of the invention.

The polymer composition and the use are characterised by what is stated in the independent claims. Some other embodiments are characterised by what is stated in the other claims. Inventive embodiments are also disclosed in the specification of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

Coniferous resins acids are advantageously available in rosin, such as in spruce resin, and tall oil fraction obtained as a by-product of a kraft pulping process of wood. Rosin primarily includes abietic acid type, e.g. abietic acid, dehydro abietic acid, and pimaric acid type, e.g. pimaric acid, isopimaric acid, resin acids. Minor amounts of p-cumaric acid and lignans can also be included in the rosin.

Generally, coniferous resin acid(s) are available in a wide variety of sources. Coniferous resin acids are typically of spruce or pine origin. For example, coniferous resin acids are provided as "resin" or "rosin". According to a definition found in the literature, "resin" is a solid or highly viscous substance of plant or synthetic origin. Resin is usually a mixture of organic compounds.

According to a definition, "rosin" is a solid form of resin produced by heating fresh liquid of resin to vaporize the volatile liquid terpene components. Rosin is also called colophony. The terms resin, rosin and colophony are also used synonymously in the literature.

In the present invention, coniferous resin acids can be originated from any source. In an embodiment, the resin acids are provided in a highly viscous form of native resin found on the trunk, stub and branches of coniferous trees. This form of resin acids is called as "resin" in the present invention.

In another embodiment, the resin acids are provided as a resin acid fraction that is enriched with resin acids and is substantially free from volatile terpenes. Minor amounts of fatty acids, p-cumaric acid and lignans can also be included in the rosin. This resin fraction is called as "rosin" in the present invention. The term "rosin" encompasses various grades of rosins including tall oil rosin, gum rosin and/or wood rosin. The tall oil rosin is obtained for example as a by-product from kraft pulping process of wood. Rosins are available as commercial products, for example FOR90 from Forchem Oyj.

In an embodiment, the booster material comprises potassium sorbate. An advantage is that potassium sorbate is food approved additive, E202, and it does not possess environmental concerns. It is also relatively inexpensive chemical compound. Potassium sorbate is biodegradable. Potassium sorbate has synergistic antimicrobial effect with coniferous resin especially against gram-negative bacteria.

In an embodiment, the booster material comprises sodium benzoate. An advantage is that sodium benzoate is food approved additive, E211, and has otherwise similar advantages as potassium sorbate does.

In an embodiment, the booster material comprises higher alcohols having at least one hydroxyl group and molecular weight about 80 g/mol - 400 g/mol, such as terpineol or geraniol. An advantage is that terpineol and geraniol can be derived from biobased sources, are biodegradable and have similar synergistic effect with coniferous resin, especially with tall oil rosin (TOR) against gram-negative bacteria.

In an embodiment, the booster material comprises organic alkali or alkali-earth salt(s), such as at least one of the following: sodium lactate, propyl-p-hydroxybenzoate, potassium acetate, sodium acetate, calcium acetate. An advantage is that these compounds are with sufficiently high boiling to be melt processed together with coniferous resin and thermoplastic polymers and with suitable molecular size to penetrate the porins in gram-negative bacteria's outer membrane.

In an embodiment, the booster material comprises nitrates. An advantage is that nitrates are food approved additive, such as E250, E251 and E252, and possess sufficiently high boiling to be melt processed together with coniferous resin and thermoplastic polymers and with suitable molecular size to penetrate the porins in gram-negative bacteria's outer membrane.

In an embodiment, the booster material comprises phosphates. An advantage is that phosphates are food approved additives, E450, and that these compounds are with sufficiently high boiling to be melt processed together with coniferous resin and thermoplastic polymers and with suitable molecular size to penetrate the porins in gram-negative bacteria's outer membrane.

In an embodiment, the booster material comprises triphosphates. An advantage is that triphosphates are food approved additives, E451, and that these compounds are with sufficiently high boiling to be melt processed together with coniferous resin and thermoplastic polymers and with suitable molecular size to penetrate the porins in gram-negative bacteria's outer membrane.

In an embodiment, the booster material comprises lactylates. An advantage is that lactylates are food approved additive, such as E481 and 482, and that these compounds are with sufficiently high boiling to be melt processed together with coniferous resin and thermoplastic polymers and with suitable molecular size to penetrate the porins in gram-negative bacteria's outer membrane.

In an embodiment, the booster material comprises potassium nitrites. An advantage is that potassium nitrites are food approved additive, such as E249, and that these compounds are with sufficiently high boiling to be melt processed together with coniferous resin and thermoplastic polymers and with suitable molecular size to penetrate the porins in gram-negative bacteria's outer membrane.

In an embodiment, the amount of the booster material is at least 0.1 wt-% of the composition, preferably 1 wt-% to 50 wt-%, more preferably 5 wt-% to 15 wt-% of the composition. An advantage is that this amount of booster material does not alter significantly physical properties of the composition.

In an embodiment, the coniferous resins acid(s) comprises tall oil rosin obtained as a by-product of a kraft pulping process of wood. An advantage of this is that easily volatile components are distilled out and the suitability for plastic compounding is thus significantly better. In addition, there is less odor and the color of the plastic compound changes less.

In an embodiment, the coniferous resins acid(s) comprises gum rosin. An advantage is that it is the most used type of rosin and widely commercially available.

In an embodiment, the coniferous resins acid(s) comprises wood rosin. An advantage of wood rosin is that it can be after several extraction and distillation rounds to become food-grade.

In an embodiment, the coniferous resins acid(s) comprises an abietic acid type resin acid(s), such as abietic acid, and dehydro abietic acid. An advantage of abietic type resin acid(s) is that it is the most common substance among the coniferous resin acid(s) and it possess good antimicrobial efficiency in the composition.

In an embodiment, the coniferous resins acid(s) comprises pimaric acid type resin acid(s), such as pimaric acid, and isopimaric acid resin acids. An advantage is that these are common substances among the coniferous resin acid(s) and possess good antimicrobial efficiency in the composition.

In an embodiment, the coniferous resins acid(s) comprises p-cumaric acid or lignans. An advantage is that these are common substances among the coniferous resin acid(s) and possess good antimicrobial efficiency in the composition.

In an embodiment, the amount of the coniferous resin acid(s) is at least 0.1 wt-% of the composition, preferably 1 wt-% to 70 wt-%, more preferably 5 wt-% to 15 wt-% of the composition. An advantage being that resin acids do not alter significantly polymer properties in this range.

In an embodiment, the polymer composition comprises hindered amine stabilizer (HALS), for instance 0.1 - 5 wt-% of the composition. HALS is good stabilizer and protects color of the composition.

In an embodiment, the polymeric substrate comprises polyamide, such as PA6. An advantage is that the melting point of PA6 is one of the lowest among melt spinnable polymers intended for clothing applications, an important property when minimizing the thermal degradation of rosin during processing.

In an embodiment, the polymeric substrate comprises polyolefin, such as polyethylene (PE) or polypropylene (PP). An advantage of the embodiment is that this combination makes it possible to manufacture very low cost antimicrobial products from commodity plastics easily available, even as recycled grades, using low processing temperatures. Polyolefins have a wide use temperature range and they are resistant to many chemicals.

In one embodiment, the polymeric substrate comprises styrene copolymer, such as ABS. An advantage of the embodiment is that these materials are among the cheapest and most commonly used technical plastics. ABS has an excellent dimension stability and therefore it is used in applications like submersible pump casing. Inhibition of microbes could provide antifouling properties in such applications.

In one embodiment, the polymeric substrate comprises polystyrene (PS). An advantage is that PS is widely used plastic in consumer goods and proved to be very compatible with coniferous resin acid(s).

In one embodiment, the polymeric substrate comprises polyvinyl chloride (PVC). An advantage is that PVC is widely used covering material in construction and benefits of antimicrobial property.

In one embodiment, the polymeric substrate comprises polylactic acid (PLA). An advantage is that fully biodegradable products having good antibacterial resistance against gram-negative bacteria may be manufactured.

In one embodiment, the polymeric substrate comprises polycaprolactone (PCL). An advantage is that fully biodegradable products having good antibacterial resistance against gram-negative bacteria may be manufactured.

### DETAILED DESCRIPTION

In the following examples, the following materials are used unless stated otherwise:
- PE:: Dowlex NG5056
- PA6:: Promyde B 15 P
- TOR:: FOR90, distilled tall oil resin
- block.PE.polyether:: Sanyo Pelestat 230

All the Examples were taken place in test tube, and duration of tests were 24 hours.

Polymer compositions were manufactured with a Buss MKS30 type of co-kneader compounder. The materials used in manufacturing the compositions were dried before compounding. The materials were fed to a mixer either from one or two feed openings with loss-in-weight feeders. Compounds were extruded into strands and cooled in water bath. Compounds were granulated with a strand cutter.

The completed mixtures were dried in a dehumidifying drier, usually at 80°C. Granule samples were used in testing the antimicrobial efficacy.

The tests marked with "A" are comparison tests without any booster material, whereas tests marked with "B" are with booster material. Number below bacteria shows number of the bacteria at the beginning of the test.

The row "result test" shows actual amount of bacteria being left in the test material.

The row "Antimicrobial activity" shows a value for Antimicrobial Activity that is Log (Nc/Nr) where Nc is number of living bacteria in control test and Nr is number of living bacteria in antimicrobial sample. Living bacteria are counted after the test in both cases.

Antimicrobial activity of the polymer samples was tested against indicator bacteria Escherichia coli DH5α (E. coli) Staphylococcus aureus ATCC 12598 (S. aureus), Salmonella, Listeria and Yersinia enterocolitica. The indicators were cultured at 37 °C in lysogeny broth (LB), with 1.5% agar for solid media. Antibacterial tests were performed in both agar media and in Ringer's solution of 1/4 strength (mixture of NaCl, KCl, CaCl₂, NaHCO₃ and distilled water).

The indicator strains were first cultured overnight in LB broth. 200 µl of the cultures were mixed in 10 ml of melted LB soft-agar (0.75% agar) in glass tube. Small pieces of granules were put onto a LB agar plate, and the soft-agar containing the indicator bacteria was poured onto the plate. The plates were incubated o/n at 37 °C after which the possible inhibition zones around the sample pieces were observed.

The indicator bacteria were first cultured overnight in LB broth. Colony forming units per ml of the o/n cultures were determined by serial dilutions in 1/4 strength Ringer's solution and plating onto LB agar. From the serial dilutions of 10²-10⁴, 1 ml (about 10⁵-10⁷ cfu/ml) was used for the antimicrobial tests by mixing with 0.5 g of sample granules in 2-ml Eppendorf tubes. The mixtures were incubated for 24 h at room temperature in a rotator (22 rpm). After incubation, the samples were serially diluted in 1/4 strength Ringer's solution and plated onto LB agar for determining the bacterial survival by colony counting. All the experiments were performed in triplicates.

### Example 1

| | | 1.A. | 1.B. |
|---|---|---|---|
| | | | |
| a. Bacteria: | | E.Coli | E.Coli |
| | Nc | 30300 | 30300 |
| b. Composition: | | Weight % | Weight % |
| polymer I | PA6 | 90 | 85 |
| polymer II | none | 0 | 0 |
| resin | TOR (FOR90) | 10 | 10 |
| booster | Potassium sorbate | 0 | 5 |
| | **Nr** | **15000** | **200** |
| | **Antimicrobial activity** | **0,31** | **2,18** |

### Example 2

| | | 2.A. | 2.B. |
|---|---|---|---|
| | | | |
| a. Bacteria: | | S. aureus | S. aureus |
| | Nc | 130000 | 130000 |
| b. Composition: | | Weight % | Weight % |
| polymer I | PE | 80 | 80 |
| polymer II | block-PE-polyether | 10 | 10 |
| resin | TOR (FOR90) | 10 | 5 |
| booster | Sodium benzoate | 0 | 5 |
| | **Nr** | **100** | **1** |
| | **Antimicrobial activity** | **3,11** | **5,11** |

### Example 3

| | | 3.A. | 3.B. |
|---|---|---|---|
| | | | |
| a. Bacteria: | | Listeria | Listeria |
| | Nc | 100000 | 100000 |
| b. Composition: | | Weight % | Weight % |
| polymer I | PE | 80 | 80 |
| polymer II | block-PE-polyether | 10 | 10 |
| resin | TOR (FOR90) | 10 | 5 |
| booster | Sodium benzoate | 0 | 5 |
| | **Nr** | **40000** | **1** |
| | **Antimicrobial activity** | **0,40** | **5,00** |

### Example 4

| | | 4.A. | 4.B. |
|---|---|---|---|
| | | | |
| a. Bacteria: | | Salmonella | Salmonella |
| | Nc | 2000000 | 2000000 |
| b. Composition: | | Weight % | Weight % |
| polymer I | PE | 80 | 80 |
| polymer II | block-PE-polyether | 10 | 10 |
| resin | TOR (FOR90) | 10 | 5 |
| booster | Potassium sorbate | 0 | 5 |
| | **Nr** | **2000** | **20** |
| | **Antimicrobial activity** | **3,00** | **5,00** |

### Example 5

| | | 5.A. | 5.B. |
|---|---|---|---|
| | | | |
| a. Bacteria: | | S. aureus | S. aureus |
| | Nc | 100000 | 100000 |
| b. Composition: | _ | Weight % | Weight % |
| polymer I | PA6 | 90 | 89 |
| polymer II | none | 0 | 0 |
| resin | TOR (FOR90) | 10 | 10 |
| booster | Terpineol | 0 | 1 |
| | **Nr** | **900** | **150** |
| | **Antimicrobial activity** | **2,05** | **2,82** |

As can be seen in all the Examples 1 - 5, the booster material makes the material composition essentially more effective compared to the comparison material compositions.

Without wishing to be bound by any theory, it is believed that resin acid(s) and the booster give synergistic antimicrobial effects based on multiple inhibiting mechanisms.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The description is only intended to illustrate the idea of the invention. The invention may vary in detail within the scope of the inventive idea defined in the following claims.

## Claims

1. A polymer composition, containing antimicrobial material for inhibiting the growth of micro-organisms in close proximity to said polymer composition, the polymer composition comprising:
- a polymeric substrate comprising at least one polymer,
- a coniferous resin acid(s) dispersed in the polymeric substrate, and
- a booster material, the booster material comprising at least one of chemicals listed herein:
- higher alcohols having at least one hydroxyl group and molecular weight between 80 g/mol and 400 g/mol,
- organic alkali salts or earth alkali salts,
- alkyl-p-hydroxybenzoates or alkali-poly-phosphates,
- nitrates,
- phosphates, and
- lactylates.

2. The polymer composition as claimed in claim 1, wherein the booster material comprises potassium sorbate.

3. The polymer composition as claimed in claim 1 or 2, wherein the booster material comprises sodium benzoate.

4. The polymer composition as claimed in any of the preceding claims, wherein the booster material comprises terpineol.

5. The polymer composition as claimed in any of the preceding claims, wherein the amount of the booster material is at least 0.1 wt-% of the composition, preferably 1 wt-% to 50 wt-%, more preferably 5 wt-% to 15 wt-% of the composition.

6. The polymer composition as claimed in any of the preceding claims, wherein the coniferous resins acid(s) are in rosin, such as in spruce resin.

7. The polymer composition as claimed in any of claims 1 - 4, wherein the coniferous resins acid(s) comprises tall oil rosin, and/or gum rosin, and/or wood rosin.

8. The polymer composition as claimed in any of the preceding claims, wherein the coniferous resins acid(s) comprises an abietic acid type resin acid(s), such as abietic acid, dehydro abietic acid.

9. The polymer composition as claimed in any of the preceding claims, wherein the coniferous resins acid(s) comprises pimaric acid type resin acid(s), such as pimaric acid, isopimaric acid resin acids.

10. The polymer composition as claimed in any of the preceding claims, wherein the coniferous resins acid(s) comprises p-cumaric acid or lignans.

11. The polymer composition as claimed in any one of the preceding claims, wherein the amount of the coniferous resin acid(s) is at least 0.1 wt-% of the composition, preferably 1 wt-% to 70 wt-%, more preferably 5 wt-% to 15 wt-% of the composition.

12. The polymer composition as claimed in any one of the preceding claims, comprising hindered amine stabilizer (HALS).

13. The polymer composition as claimed in any one of the preceding claims, wherein the polymeric substrate comprises polyamide, such as PA6, or polyolefin, such as polyethylene (PE).

14. Use of polymer composition as claimed in any one of the preceding claims for inhibiting micro-organism.

15. Use of polymer composition as claimed in claim 14 for inhibiting gram negative bacteria.
